Europäisches Patentamt

European Patent Office

Office européen des brevets

(19)

(11) Veröffentlichungsnummer: **0 308 574 B1**

# (12) EUROPÄISCHE PATENTSCHRIFT

(45) Veröffentlichungstag der Patentschrift: **21.08.91**

(51) Int. Cl.⁵: **B62D 21/00**, B62D 65/00

(21) Anmeldenummer: **88104298.0**

(22) Anmeldetag: **18.03.88**

(54) **Anordnung für den Transport der Lenk- und Antriebseinheiten von selbstfahrenden, frontangetriebenen Spezialkraftfahrzeugen.**

(30) Priorität: **26.06.87 DE 3721189**

(43) Veröffentlichungstag der Anmeldung:
**29.03.89 Patentblatt 89/13**

(45) Bekanntmachung des Hinweises auf die
Patenterteilung:
**21.08.91 Patentblatt 91/34**

(84) Benannte Vertragsstaaten:
**DE ES FR GB IT**

(56) Entgegenhaltungen:
**DE-A- 2 930 036**
**GB-A- 2 137 938**

(73) Patentinhaber: **AL-KO KOBER AG**
**Ichenhauser Strasse 14**
**W-8871 Kötz 2(DE)**

(72) Erfinder: **Kober, Kurt**
**2 Sandberg,**
**W-8871 Kötz(DE)**

(74) Vertreter: **Ernicke, Hans-Dieter, Dipl.-Ing. et al**
**Schwibbogenplatz 2b**
**W-8900 Augsburg(DE)**

## Beschreibung

Die Erfindung bezieht sich auf eine Anordnung für den Transport der Lenk- und Antriebseinheiten von selbstfahrenden, frontangetriebenen Spezial-Kraftfahrzeugen, z.B. Wohnmobile, Verkaufsfahrzeuge, Viehtransporter, Lastfahrzeuge und dgl., von einer zur anderen örtlich entfernt liegenden Fertigungsstätte, wo die Lenk- und Antriebseinheiten mit dem Chassis und den Aufbauten ausgerüstet werden, wobei das Chassis zwei mit der Lenk- und Antriebseinheit verbundene oder verbindbare Längsträger aufweist.

Unter Lenk- und Antriebseinheit wird die frontale Baueinheit eines solchen Spezial-Kraftfahrzeuges verstanden, welche den Rahmen der Lenk- und Antriebseinheit mit dem daran angeordneten Motorblock, der angetriebenen Vorderradachse, der Lenkanordnung und den Fahrersitz umfaßt. Die Herstellung solcher Lenk- und Antriebseinheiten läßt sich unter der Voraussetzung großer Stückzahlen preisgünstig organisieren, wobei keine Rücksicht auf den Verwendungszweck und den Formen des Chassis und der Aufbauten genommen zu werden braucht. Die großen Betriebe, welche solche Lenk- und Antriebseinheiten in großer Stückzahl herstellen können, sind jedoch nicht in der Lage, den vielfältigen Sonderwünschen zur Bildung des Chassis und der Aufbauten nachzukommen. Deshalb ist ein Transport der einzelnen, an sich schon fahrtüchtigen Lenk- und Antriebseinheit zu einem anderen Betrieb erforderlich, wo die Bildung des Chassis und der Aufbauten unter der Voraussetzung kleinerer Stückzahlen und besonderer Wünsche vorgenommen werden kann.

Wenn der einzelne Zugkopf selbstfahrend transportiert werden soll, ist er mit zwei Längsträgern und mindestens einer Hinterachse versehen. Dies setzt für jeden zu transportierenden Zugkopf einen Fahrer voraus, weshalb die Transportkosten von erheblichen Personalkosten überlagert sind.

Werden solche Zugköpfe per Lastwagen oder Eisenbahn transportiert, benötigen sie einen erheblichen Platzbedarf je Zugkopf, was die Transportkosten ebenfalls erheblich erhöht.

Aufgabe der Erfindung ist es daher, den Transport der Zugköpfe von einer zur anderen Fertigungsstätte zu vereinfachen und so zu gestalten, daß erhebliche Personal- und Transportkosten-Ersparnisse eintreten.

Ausgehend von einem Stand der Technik, wie er beispielsweise durch die DE-A-29 30 036 im obigen Sinne gegeben ist, besteht die Erfindung darin, daß jeweils zwei Zugköpfe ohne ihre Längsträger für den Transport mit ihren rückwärtigen Enden miteinander fest und fahrtauglich verbunden und die eventuell ursprünglich mit den Zugköpfen verbunden gewesen Längsträger abmontiert bzw. abgetrennt sind.

Im Normalfall werden bei einer Massenfertigung von Zugköpfen deren Längsträger an die Zugköpfe angeflanscht oder angeschraubt. Der Wunsch, Zugköpfe ohne Längsträger zu erhalten, würde einen nicht ganz unproblematischen Eingriff in die automatische Organisation der Fertigung mit sich bringen. Deshalb ist es oftmals billiger, die standardisierte Konstruktion des einzelnen Zugkopfes mit seinen Längsträgern herstellen und daraufhin die Längsträger entfernen zu lassen, wobei es durchaus offen bleiben kann, ob diese abgetrennten Längsträger bei der Bildung des Chassis an der anderen Fertigungsstätte wieder verwendet werden.

Weitere Ausgestaltungen der Erfindung sind in den Unteransprüchen erwähnt. Es ist dabei beispielsweise die Möglichkeit gegeben, Zugköpfe unmittelbar aneinanderzuflanschen, wobei die Flansche verwendet werden, die ursprünglich für die Anflanschung von Längsträgern vorgesehen sind. Um diese unmittelbare Anflanschung der Zugköpfe zu ermöglichen, sieht die Erfindung vor, die Flansche mit spiegelbildlich zur Fahrzeuglängsachse angeordneten Flanschbohrungen zu versehen.

Es ist im Sinne der Erfindung aber auch möglich, Zugköpfe unter Zwischenfügung kurzer Zwischenflansche miteinander zu verbinden. In diesem Falle braucht die spiegelbildliche Anordnung der Flanschbohrungen nicht vorhanden zu sein, weil die Zwischenflansche den Flanschbohrungen angepaßt werden können.

Die Erfindung bietet aber auch die Möglichkeit, Zugköpfe für den gemeinsamen Transport miteinander zu verschweißen. Hierfür bieten sich verschiedene Varianten an, indem beispielsweise die ursprünglich vorhandenen Längsträger an jedem Zugkopf abgetrennt und die Zugköpfe im Bereiche dieser Trennstellen miteinander verschweißt werden. Die Erfindung schließt natürlich nicht aus, Zugköpfe unter Zwischenfügung von Zwischenstücken in geeigneter Weise miteinander zu verschweißen, wobei sich natürlich als selbstverständlich ergibt, daß die Schweißverbindung an der Fertigungsstätte, wo das Chassis gebildet wird, wieder gelöst werden muß.

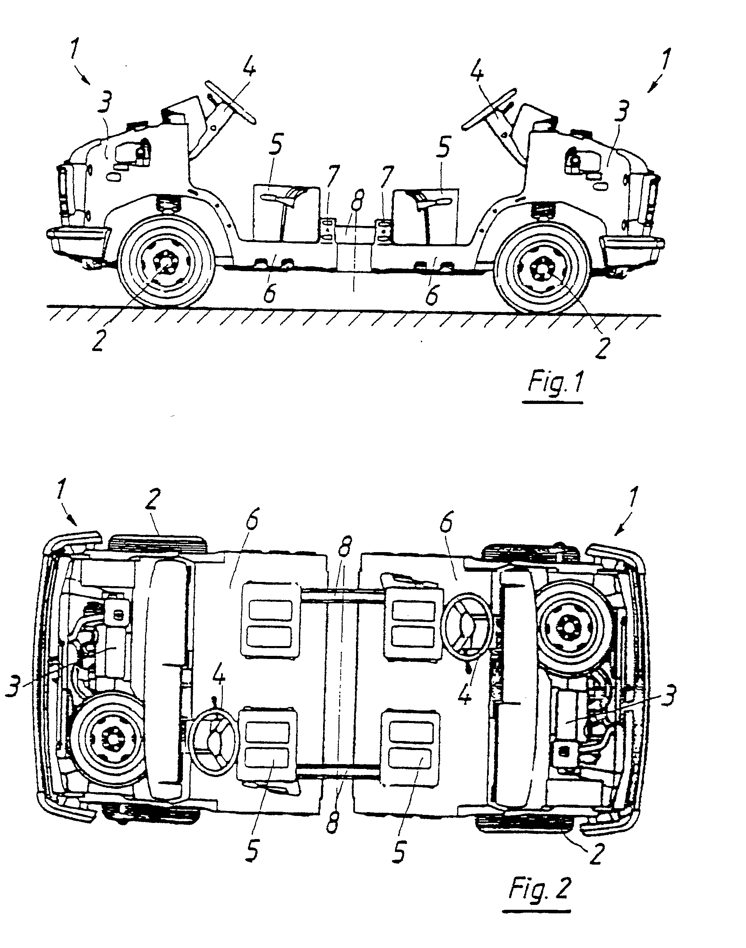

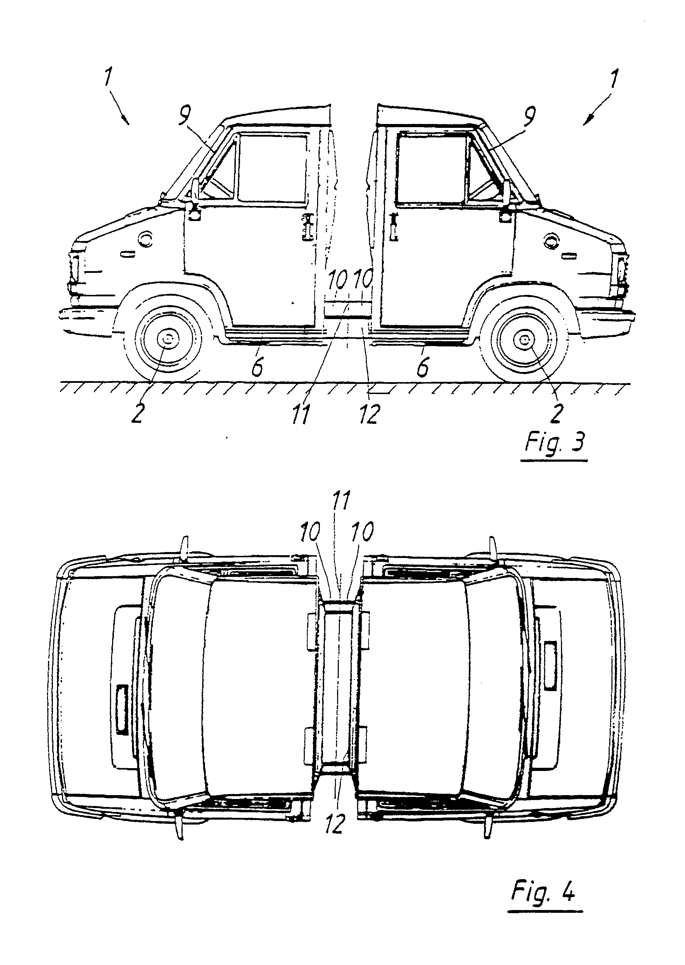

Diese und weitere Einzelheiten der Erfindung ergeben sich aus der Zeichnung. In ihr ist die Erfindung schematisch und beispielsweise dargestellt. Es zeigen:

Fig. (1) und (2)
Seitenansicht und Draufsicht auf zwei miteinander zu einem Tandem verbundene Zugköpfe und

Fig. (3) und (4)
Seitenansicht und Draufsicht auf zwei andere, miteinander verbundene Zugköpfe mit aufgesetztem Fahrerhaus.

Beim Ausführungsbeispiel der Fig. (1) und (2) besteht der einzelne Zugkopf (1) aus einem Zugkopfrahmen (6) mit einer darin gelagerten, angetriebenen Vorderradachse (2), einem Motorblock (3), der Lenkanordnung (4) und dem Fahrersitz (5).

Normalerweise werden solche Zugköpfe (1) auch noch unter Anschluß von zwei nicht dargestellten Längsträgern gefertigt, welche die einzelne Hinterradachse aufnimmt und die Basis für das zu bildene Chassis darstellt. Für die Zwecke der Erfindung werden solche Längsträger aber nicht benötigt, wenn der einzelne Zugkopf (1) von der Fertigungsstelle, wo er hergestellt worden ist, zu einer anderen Fertigungsstelle transportiert werden muß, wo dessen Ausrüstung zum fertigen Spezial-Kraftfahrzeug erfolgen soll.

Nach der Erfindung werden nämlich zwei Zugköpfe (1) mit ihren rückwärtigen Enden fest miteinander verbunden und zu einem fahrtüchtigen, von einem Zugkopf (1) aus betätigbaren und steuerbaren Tandemfahrzeug gestaltet. Auf diese Weise lassen sich jeweils zwei Zugköpfe durch eine Bedienungsperson auch über weite Strecken transportieren.

Von den zahlreichen Möglichkeiten, wie zwei Zugköpfe (1) an ihren rückwärtigen Enden miteinander fest verbunden werden können, werden nachstehend einige Möglichkeiten aufgezeigt:
In Fig. (1) und (2) ist davon ausgegangen, daß die nicht dargestellten Längsträger normalerweise über Flansche (7) mit dem Zugkopfrahmen (6) verbunden sind. Indem man diese Längsträger entfernt und an deren Stelle kurze Zwischenflansche (8) einsetzt, die mit den Flanschen (7) der Zugköpfe (1) verbunden werden, erhält man ein fahrtüchtiges Tandem von zwei Zugköpfen (1).

Man kann auf solche Zwischenflansche (8) dann verzichten, wenn die Flansche (7) der einzelnen Zugkopfrahmen (6) so gestaltet sind, daß die Zugköpfe (1) an diesen Flanschen (7) unmittelbar miteinander verschraubt werden können. Diese Möglichkeit setzt natürlich spiegelbildlich zur Mittellängsachse der einzelnen Zugköpfe liegende Bohrungen der Flansche (7) voraus.

Es ist aber auch möglich, die Zugköpfe (1) im Bereiche der einander zugekehrten Teile der Zugkopfrahmen (6) für den Transport miteinander zu verschweißen.

Eine solche Möglichkeit zeigen die Fig. (3) und (4) auf, die überdies deutlich machen, daß der einzelne Zugkopf (1) auch mit einem Fahrerhaus (9) bereits versehen sein kann.

Zwischen den beiden Zugköpfen (1) befindet sich beim Ausführungsbeispiel der Fig. (3) und (4) ein Längsträgeransatz (10), die beispielsweise dadurch entstehen können, daß die ursprünglichen Längsträger unter Zurücklassung dieser Längsträgeransätze (10) einfach abgeschnitten oder in sonstiger Weise abgetrennt worden sind. Im Bereich dieser Trennflächen werden nun die Längsträgeransätze (10) wieder miteinander verschweißt, wobei die Schweißnaht (11) als strichpunktierte Linie dargestellt ist. Man kann, um die Fahrtüchtigkeit dieses Tandems zu erhöhen, zusätzlich ein Zwischenstück (12) in die Schweißverbindung mit einbeziehen, ohne daß aber hierfür eine Notwendigkeit gegeben ist.

Bei Verbindung von Zugköpfen (1), die von Anfang an keine Längsträger aufweisen, bietet sich die Zwischenfügung anderer Bauteile an, die an geeigneter Stelle miteinander und mit den Zugkopfrahmen (6) der Zugköpfe (1) verschweißt werden.

Schließlich ist es auch denkbar, für den Transport bestimmte, besondere Flansche an Längsträgeransätze (10) anzuschweißen und die Zugköpfe (1) mit Hilfe dieser Sonderflansche zu verbinden. In jedem Falle ist es erforderlich, diese für den Transport vorübergehend vorgesehenen Verbindungen an der Fertigungsstätte zu lösen bzw. zu entfernen, bevor mit dem Anbau des Chassis und der Aufbauten begonnen werden kann.

Stückliste

| (1) | Zugkopf |
| (2) | angetriebene Vorderradachse |
| (3) | Motorblock |
| (4) | Lenkanordnung |
| (5) | Fahrersitz |
| (6) | Zugkopfrahmen |
| (7) | Flansch für Längsträger |
| (8) | Zwischenflansch |
| (9) | Fahrerhaus |
| (10) | Längsträgeransatz |
| (11) | Schweißnaht |
| (12) | Zwischenstück |

**Patentansprüche**

1. Anordnung für den Transport der Lenk- und Antriebseinheiten von selbstfahrenden, frontangetriebenen Spezialkraftfahrzeugen, z.B. Wohnmobile, Verkaufsfahrzeuge, Viehtransporter, Lastfahrzeuge und dgl., von einer zur anderen, örtlich entfernt liegenden Fertigungsstätte, wo die Lenk- und Antriebseinheiten mit dem Chassis und den Aufbauten ausgerüstet werden, wobei das Chassis zwei mit dem Lenk- und Antriebsrahmen verbundene oder verbindbare Längsträger aufweist, dadurch **gekennzeichnet,** daß jeweils zwei Lenk- und Antriebseinheiten(1) ohne ihre Längsträger für den Transport mit ihren rückwärtigen Enden miteinander fest und fahrtauglich verbunden und die eventuell ursprünglich mit den Lenk- und Antriebseinheiten (1) verbunden gewesenen Längsträger abmontiert bzw. abgetrennt sind.

2. Anordnung nach Anspruch (1), dadurch **gekennzeichnet,** daß die Flansche (7) von Lenk- und Antriebseinheiten (1) für anflanschbare Längsträger spiegelbildlich zur Fahrzeuglängsachse angeordnete Flanschbohrungen aufweisen.

3. Anordnung nach Anspruch (1), dadurch **gekennzeichnet,** daß die Flansche (7) von Lenk- und Antriebseinheiten (1) für anflanschbare Längsträger unter Zwischenfügung kurzer Zwischenflansche (8) miteinander verbunden sind.

4. Anordnung nach Anspruch (1), dadurch **gekennzeichnet,** daß Lenk- und Antriebseinheiten (1) miteinander verschweißt sind.

5. Anordnung nach Anspruch (4), dadurch **gekennzeichnet,** daß die Verschweißung im Bereich kurzer Längsträgeransätze (10) vorgesehen ist.

**Claims**

1. Arrangement for transporting the steering and drive units of automotive front-wheel drive special purpose motor vehicles, for example motor caravans, sales vehicles, cattle transporters, lorries and the like, from one production site to another production site of different location, where the steering and drive units are fitted with the chassis and the bodywork, the chassis having two longitudinal bearers which are connected or are connectable to the steering and drive frameworks, characterised in that in each case two steering and drive units (1) without their longitudinal bearers are for transporting purposes connected to each other in a secure and roadworthy manner by means of their back ends, and in that the longitudinal bearers, which were possibly originally connected to the steering and drive units (1), are detached or separated.

2. Arrangement according to Claim 1, characterised in that the flanges (7) of steering and drive units (1), for longitudinal bearers which may be flanged on, have flange bores arranged mirror-symmetrical to the longitudinal axis of the vehicle.

3. Arrangement according to Claim 1, characterised in that the flanges (7) of steering and drive units (1), for longitudinal bearers which may be flanged on, are connected to each other by insertion of short intermediate flanges (8).

4. Arrangement according to Claim 1, characterised in that steering and drive units (1) are welded to each other.

5. Arrangement according to Claim 4, characterised in that the weld is provided in the region of short longitudinal bearer attachment pieces (10).

**Revendications**

1. Arrangement pour le transport des unités de direction et d'entraînement de véhicules automobiles spéciaux à traction avant, par exemple un mobile home, des véhicules de vente, des transporteurs de bétail, et des véhicules utilitaires ou autres, d'une usine de fabrication à une autre, éloignées l'une de l'autre, les unités de direction et d'entraînement étant équipées du châssis et des superstructures, tandis que le châssis comporte deux longerons reliés ou pouvant être reliés au châssis de l'unité de direction et d'entraînement, caractérisé par le fait que les extrémités arrière de respectivement deux unités de direction et d'entraînement (1) sont raccordées entre elles de façon fixe et de manière à être aptes à se déplacer, sans leurs longerons, et que les longerons qui étaient à l'origine raccordés aux unités de direction et d'entraînement (1), sont démontés ou détachés.

2. Arrangement suivant la revendication 1, caractérisé par le fait que les brides (7) d'unités de direction et d'entraînement (1) comportent, pour des longerons pouvant être raccordés par brides, des perçages disposés symétriquement par rapport à l'axe longitudinal du véhicule.

3. Arrangement suivant la revendication 1, caractérisé par le fait que les brides (7) d'unités de direction et d'entraînement (1) pour des longerons pouvant être raccordés par brides, sont réunies entre elles moyennant l'interposition de courtes brides intercalaires (8).

4. Arrangement suivant la revendication 1, caractérisé par le fait que des unités de direction et d'entraînement (1) sont réunies entre elles par soudage.

5. Arrangement suivant la revendication 4, caractérisé par le fait que le soudage est prévu dans la zone de courtes parties saillantes (10) des longerons.

Fig. 1

Fig. 2

Fig. 3

Fig. 4

7